# EUROPEAN PATENT SPECIFICATION

(11) **EP 2 911 827 B1**
(45) Date of publication and mention of the grant of the patent: **19.07.2017**
(21) Application number: 13727849.5
(22) Date of filing: 03.06.2013
(51) Int. Cl.: B23Q 1/00, B23Q 3/10

(54) **INTERFACE STRUCTURE**
SCHNITTSTELLENSTRUKTUR
STRUCTURE D'INTERFACE

(30) Priority: 15.10.2012 IT TV20120044
(43) Date of publication of application: 02.09.2015
(73) Proprietor: Canuto, Almerino, 31032 Casale Sul Sile (IT)
(72) Inventor: Canuto, Almerino, 31032 Casale Sul Sile (IT)
(74) Representative: Gallo, Luca
(86) International application number: PCT/EP2013/061355
(87) International publication number: WO 2014/060122

(56) References cited:
- EP-B1- 1 346 794
- WO-A1-2012/042546
- GB-A- 2 214 452

## Description

The present application relates to an interface structure. Interface structures are known for example from EP2429748B1, on which the preamble of appended claim 1 is based. EP1346794B1 is known which relates to a modular structure, particularly for mounting blanks on retainers, which addresses the problem that arises when certain operations need to be carried out, such as for example painting, cleaning and assembly, or the execution of various forms of working, such as for example removing shavings, which require the locking of the piece and/or blank in a preset position for the treatment thereof.

Thus devices are known which are indispensable whenever the stable locking is required of an object to be treated by way of generic and even simple operations, not necessarily in a purely industrial setting.

A significant drawback, which is complained of in conventional devices, lies in the fact that in order to achieve a stable locking of the piece it is necessary to bring both of the spacing elements of the locking device in contact with two opposite side faces of the same piece.

In this manner the possibility is thus ruled out of executing any work at those side faces, which, since they are affected by the contact, have no free surfaces to allow contact with the tool or, more generally, with the component of any machine tool.

The necessity follows from this of subsequently removing the piece, positioning it according to a new orientation which is such as to allow the exposure of the two side surfaces which were before partially concealed by the locking elements.

A further aggravating factor of the above problem consists in that, during the locking of the piece, the latter has at least three surfaces at which no working can be done, the third surface, in addition to the side surfaces adjacent to the locking elements, being the lower one, which is entirely resting on the work surface of the machine tool.

The necessity follows from this of having to resort to multiple successive steps of positioning and associated locking of the piece, with the further aggravating factor of possibly repeatedly making systematic positioning errors, which thus have a negative effect on the precision that can be achieved overall at the end of working on the piece.

Another problem that is complained of in conventional devices lies in the necessity of availing of qualified labor in order to be able to perform the delicate preliminary operations of positioning and centering the piece.

An additional drawback, which often recurs in conventional locking devices, consists in the possibility of damaging the piece by local deformation, at the surfaces that have already been worked and are subsequently subjected to contact with the brackets, in order to allow the working of surfaces of the piece which have not yet been treated.

A significant problem, in addition to those mentioned above, relates to the considerable expenditure of time caused by repeated, successive operations to unlock, reposition and relock a piece that is intended to receive some form of treatment at multiple surfaces.

In a partial solution to such drawbacks, EP1346794B1 claims a modular structure, for mounting, on retainers, blanks having at least one seat, said modular structure comprising at least one flat plate that has a plurality of first seats for detachable connection of first fixing means for at least one first body and second temporary fixing means allowing detachable connection of said first body to said blank characterized in that said second temporary fixing means allow connection of said modular structure at said seat formed in said blank and in that it further comprises a first centering bush for the automatic centering of said first body with respect to said first seat, said first bush having a first portion which can be connected in said first seat and a second frustum-shaped upper portion which has an approximately frustum-shaped outer perimetric surface that protrudes above the plate once the connection between the first seat and the bush has been established, said second frustum-shaped upper portion having a lower surface directly in contact with an upper surface of said flat plate; said first means for fixing said first body to said plate comprise a first traction element for connection between said first seat and said first body and a first vise-like device, which is associated with said first body, so as to temporarily lock said first traction element; said first body, which is cylindrical, has a second axial hole for the partial containment of said first and/or second traction elements, and comprises, in a lower region, a third through hole that is formed radially and is meant to accommodate said first vise-like device, said third hole affecting said second axial hole approximately at right angles; said first vise-like device is constituted by a pair of first jaws, which can be accommodated inside said third hole and are arranged mirror-symmetrically in mutually diametrically opposite positions, and said first jaws, which are substantially cylindrical, are mutually associable by way of activation means, which are constituted by a first screw, which is arranged coaxially to a fourth hole and a fifth hole which are through holes and are formed axially along said pair of first jaws.

This solution, although solving the above-mentioned problems, also has drawbacks in that it has been found that in the parts to be fixed, and thus in the blanks (designated with 50 in EP1346794B1), a first threaded hole (designated with 36 in EP1346794B1) is obtained for a fixing element (such as a threaded shank, designated with 39a in EP1346794B1) and thus a first seat (designated with 34 in EP1346794B1) for a centering bush (designated with 37 in EP1346794B1): in the course of the production process of the part to be fixed, some working steps can cause the geometric shape of the piece to vary, since the first seat may subsequently be recentered with a greater size and in the best adapted position for the centering of the part (slightly shifted from the previous one).

It follows from this that the diameters of the first hole and of the first seat do not have the same axis.

The same applicant, in a partial solution to the above-mentioned problems, filed, on 11/7/2012, Italian application no. TV2012A000129 relating to a device for compensating the misalignment in automatic locking systems for mounting, on retainers, blanks which have a first hole, for a fastening element, at the end of which a first seat for a centering bush is provided, characterized in that it is constituted by a box-like body composed of a T-shaped hollow body and by a U-shaped base which form an inner seat for a truncated pyramid shaped jacket, arranged coaxially to the shank of said hollow body and above a piston, having the capability to move transversely with respect to said shank, a traction element being slideably arrangeable in said shank of said hollow body and axially integral with said fixing element and with which said centering bush is coaxially associated in an upper region and can be arranged at said first seat which has a diameter that exceeds the diameter of said first fixing hole and is provided eccentrically with respect to the latter, said traction element selectively cooperating with spheres which can be accommodated inside adapted openings provided in said shank and inside adapted second seats which are provided on said jacket, between the head of said hollow body and said jacket elastically compressible elements being provided, means being present for allowing a temporary axial movement of said piston.

Such solution, differently from the known art explained in which there is a mechanical interconnection of the various components which are mutually axially arrangeable in a stable condition, makes it possible, thanks to the presence of the piston, to achieve an adjustment of the positioning through the use of pneumatic means which are allowed to perform an axial movement with respect to the various components.

Such solution has been provided in order to enable the fixing both of pieces and of pallets, which are handled in automated environments.

Although such two solutions make it possible to position and stably lock the pieces on the platform of any machine tool so as to perform the desired work, it has been found that the two solutions must be usable separately: the first for manually locking pieces and the second for automatically locking them.

The two solutions cannot be used in conjunction on the same platform, owing to their mechanical diversity, which makes them incompatible.

The aim of the present invention is therefore to resolve the above-mentioned technical problems, eliminating the drawbacks in the cited known art, by providing an invention that makes it possible to use, in conjunction and on the same platform, both of the solutions explained above for the purpose of performing the centering and the stable fixing of pieces to be worked on the platform of any machine tool while at the same time being able to vary both the height of positioning of the pieces and that of the pallets on which they are to be positioned.

Within this aim an object of the present invention is to provide a structure that, in addition to the foregoing characteristics, is also low-cost and can be made with usual and conventional machinery and plants.

This aim and these and other objects which will become more apparent hereinafter, are achieved by an interface structure for automatic locking systems for the mounting of blanks that are associable with a plate which can be associated with a base for supporting a T-shaped element which can move axially to an abutment which is integral with said base and the shank of which has balls that selectively protrude outside said abutment, characterized in that it is constituted by a sleeve, which is provided in a single body and can be associated detachably and coaxially with said abutment, and is provided, axially to a first, lower end, with a first seat from which an annular ridge protrudes, provided with temporary means of fastening with said balls, said temporary fastening means being adapted to determine the stable interconnection with said abutment, said sleeve having, axially to a second, upper end, means for the jaw connection of a U-shaped toothed pivot provided with a centering bush.

Further characteristics and advantages of the invention will become more apparent from the detailed description of a particular, but not exclusive, embodiment, illustrated by way of non-limiting example in the accompanying drawings wherein:

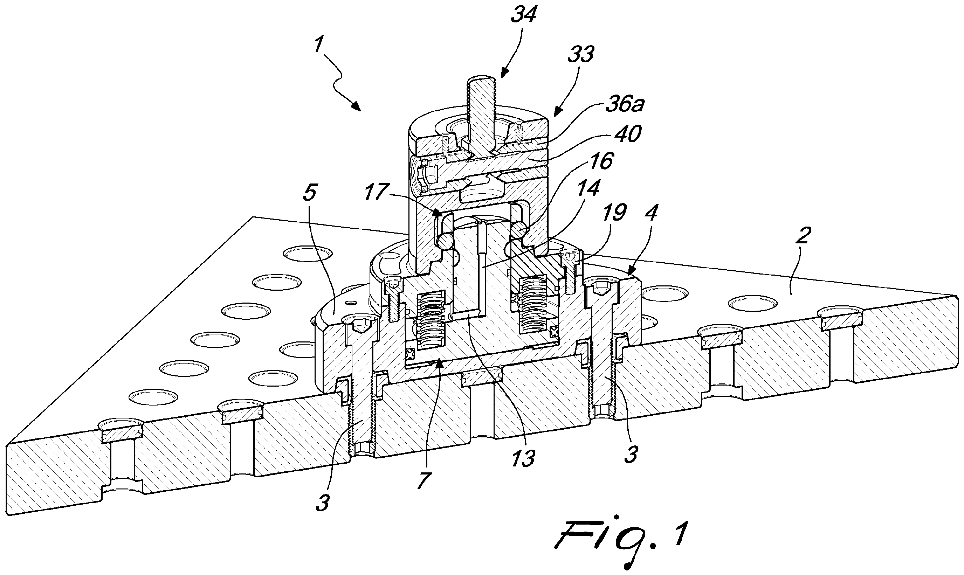

Figure 1 is a partially sectional three-quarters view of the interface structure of the invention associated with the abutment which is integral with a plate for the mounting of blanks;
Figure 2 is a diametrical sectional view of the interface structure of the invention of the previous figure in the condition of stable interconnection with said abutment;

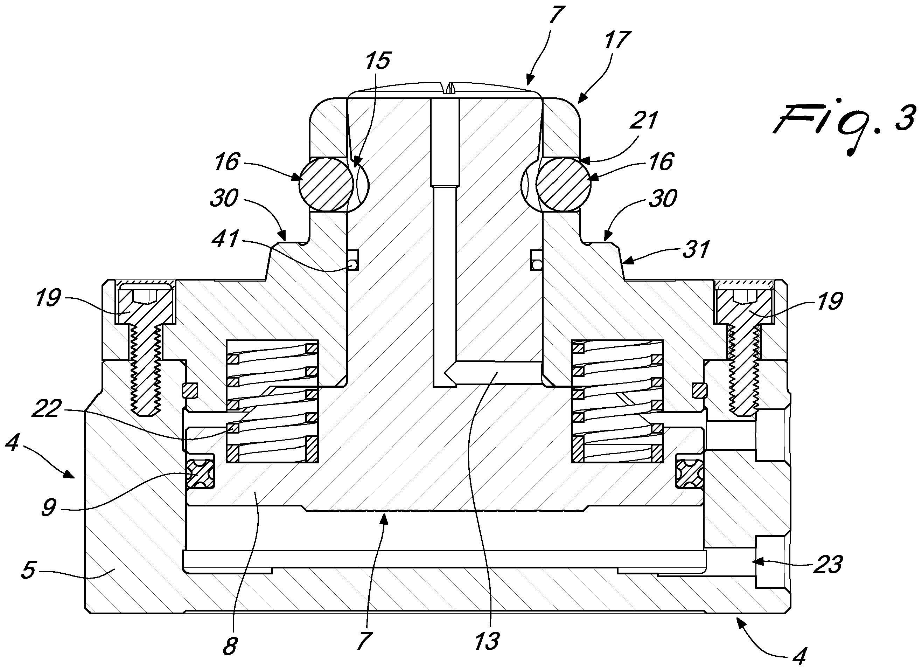

Figure 3 is a view similar to the previous figure of the interface structure of the invention in the condition of disconnection from said abutment;

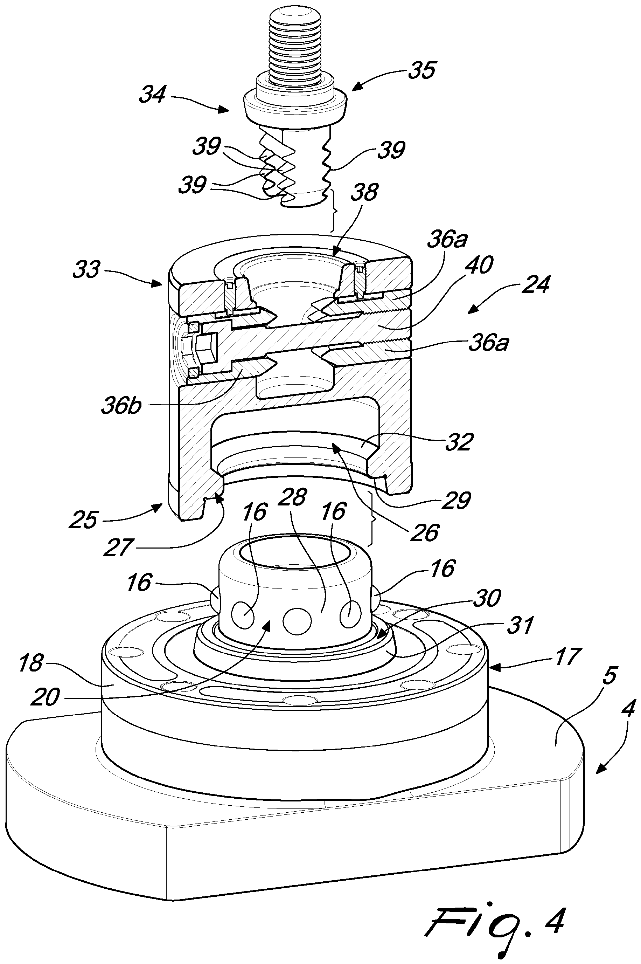

Figure 4 is an exploded view of the interface structure of the invention and other components;

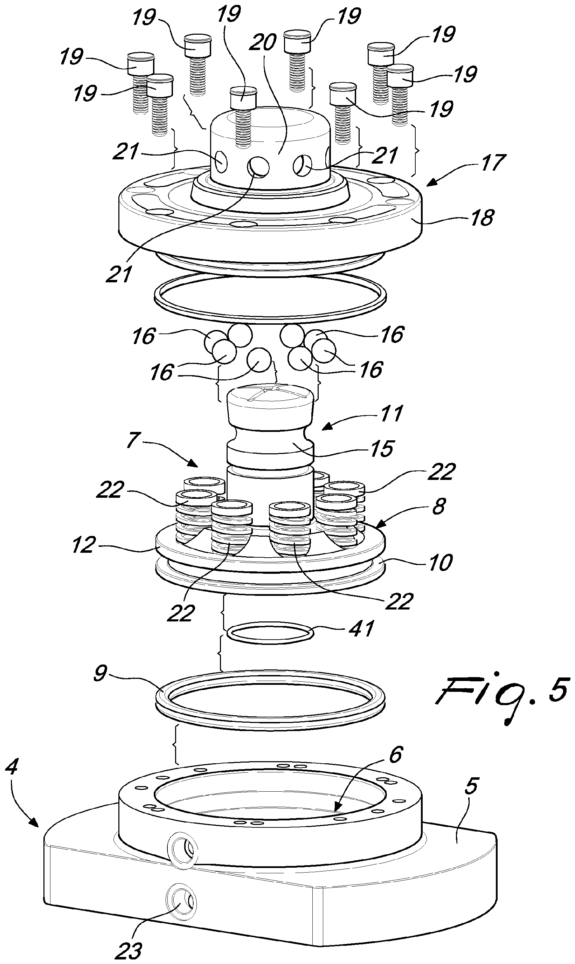

Figure 5 is an exploded view of the supporting base, the T-shaped element, and the abutment.

In the embodiments illustrated, individual characteristics shown in relation to specific examples may in reality be interchanged with other, different characteristics, existing in other embodiments.

With reference to the figures, the reference numeral 1 generally designates an interface structure for automatic locking systems for the mounting of blanks that are associable with a plate 2 with which it is possible to associate, by means of first screws 3, a base 4 comprising a first annular base 5, provided with adapted holes for the first screws 3, and an axial hollow 6 that accommodates and supports an element 7 shaped like an overturned T.

The latter has a head 8, which can be slideably engaged within the hollow 6 in contrast with a first sealing gasket 9 which is arranged at an adapted first seat 10 which is formed at the perimetric rim of the head 8.

The element 7 has moreover a shank 11 that is connected to the head 8 on an inclined plane 12 .

Provided radially and axially to the shank 11 are a first pipe 13 and a second pipe 14, which are mutually connected, for the passage of air.

Proximate to the end tips of the shank 11 there is a second seat 15 for a plurality of balls 16 which can be partially accommodated within such seat 15.

The element 7 can move axially to an abutment 17 which is essentially shaped like an overturned T so as to form a second annular base 18 on which adapted holes for complementarily shaped second screws 19 are provided which are adapted to render the abutment 17 integral with the base 4.

Provided at the shank 20 of the abutment 17 are adapted openings 21 which are adapted to enable the partial exit of the balls 16 which thus cannot exit entirely.

The axial movement of the element 7 with respect to the abutment 17 occurs in contrast with adapted elastically compressible elements such as springs 22.

Such movement, moreover, is achieved by way of the injection of air through an adapted third pipe 23 which is formed radially to the first annular base 5, the third pipe 23 injecting air below the head 8 of the element 7.

The thrust to which the element 7 is subjected leads to the compression of the springs 22 which, once the pressure of the air has ceased, push the element 7 back into the hollow 6.

The interface structure 1 for automatic locking systems for the mounting of blanks is constituted by a sleeve 24, which is provided in a single body which can be associated detachably and coaxially with the abutment 17.

The sleeve 24 is provided, axially to a first, lower end 25, with a first seat or cavity 26 from which an annular ridge 27 radially protrudes which is of such size as to allow its axial movement with respect to the side surface 28 of the shank 11 of the element 7.

The annular ridge 27 is arranged, in the condition for stable coupling with the abutment 17, in a region facing the balls 16 that protrude from the shank 20 of the abutment 17, but slightly lowered with respect to them.

The depth of the first seat or cavity 26 is such as to allow the coupling, in the stable condition, with the shank 11 of the element 7.

The annular ridge 27 has a lower surface 29 which is shaped complementarily to the surface 30 of a projecting ridge 31 that protrudes from the second annular base 18 of the abutment 17 coaxially to the shank 20.

The annular ridge 27 is provided with means for temporary fastening to the balls, such means being adapted to determine the stable interconnection with the abutment 17.

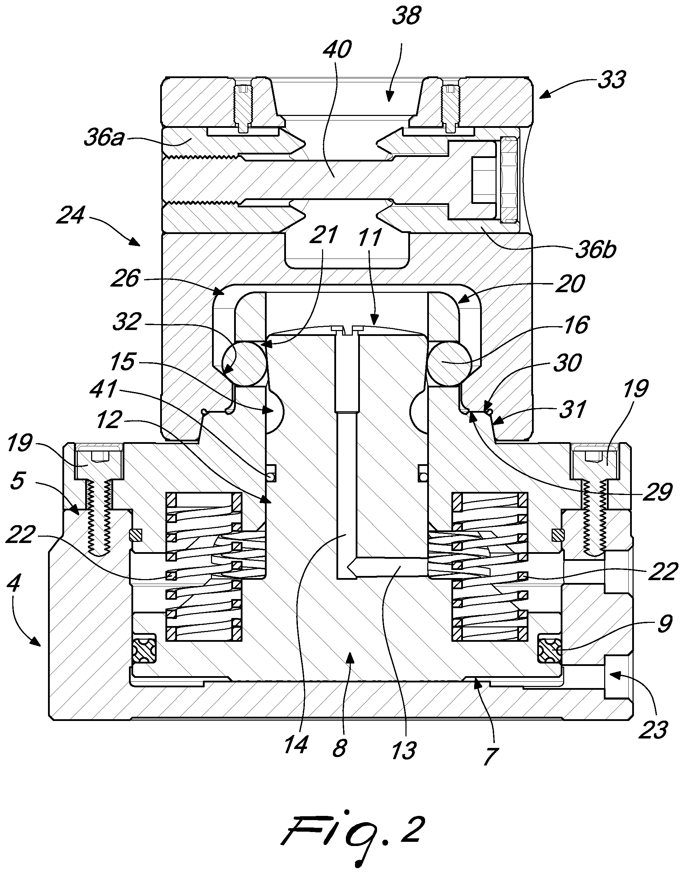

The means for temporary fastening are constituted by the upper surface 32 of the annular ridge 27, the upper surface having an inclined arrangement that interacts, in the condition of stable interconnection with the abutment 17 shown in Figure 2, with a portion, underlying the diametrical plane, of the outer side surface of the various balls 16 which are forced to protrude outside the shank 20 of the abutment by the shank 11 of the element 7 pushed upward by the air injected through the third pipe 23.

In this condition the lower surface 29 of the annular ridge 27 is in abutment with the projecting ridge 31 protruding from the second annular base 18 of the abutment 17; the balls 16 thus generate a thrust, when they are forced outside the shank 20, which is discharged at the upper surface 32 of the annular ridge 27 thus achieving a clamping that renders the connection with the abutment 17 stable.

The sleeve 24 has, proximate to a second, upper end 33, means for the jaw connection of a U-shaped toothed pivot 34 which is provided with a centering bush 35.

The bush 35, which is of a conventional type, has a double taper which is adapted to enable an adaptation of the position of a manufactured article with respect to the position assumed by the pivot 34.

Said jaw coupling means are constituted by two barrels 36a and 36b which are slideably associable within adapted seats 37a and 37b which are provided transversely to the sleeve 24 and along the same axis so as to affect a second seat or cavity 38 which is provided axially to the sleeve and is adapted to accommodate a part of the toothed pivot 34.

The ends, which are mutually facing, of the two barrels 36a and 36b are contoured so as to interact selectively with some of the teeth that are present at the lower end of the toothed pivot 34.

The clamping of the two barrels 36a and 36b and therefore the locking of the toothed pivot 34 occur by means of an adapted third screw (40).

The seal of the element 7 with respect to the abutment 17 is made possible by the presence of a second gasket 41 arranged coaxially to the shank 11.

In practice it has been found that the invention has fully achieved the intended aim and objects, an interface structure having been obtained which can be used on the same platform, both for manually locking both pieces and pallets, and for achieving such locking automatically.

Naturally the materials used as well as the dimensions of the individual components of the invention may be more pertinent to specific requirements.

The various means of achieving certain different functions certainly need not coexist only in the embodiment shown, but may be present in many embodiments, even if they are not shown.

The characteristics indicated above as advantageous, convenient or the like, may also be missing or be substituted by equivalent characteristics.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An interface structure (1) for automatic locking systems for the mounting of blanks, comprising a base (4), which is associable with a plate (2) and supports a T-shaped element (7) which can move axially to an abutment (17) which is integral with said base (4) and the shank (11) of which has balls (16) that selectively protrude outside said abutment (17), **characterized in that** it also comprises a sleeve (24), which is provided in a single body and can be associated detachably and coaxially with said abutment (17), and is provided, axially to a first, lower end (25), with a first seat (26) from which an annular ridge (27) protrudes, provided with means for temporary fastening to said balls (16), said fastening means being adapted to determine the stable connection with said abutment (17), said sleeve (24) having, axially to a second, upper end (33), means for the jaw connection of a U-shaped toothed pivot (34) provided with a centering bush (35).

2. The structure according to claim 1, **characterized in that** said annular ridge (27) is of such size as to allow its axial movement with respect to the side surface (28) of said shank (11) of said element (7).

3. The structure according to claim 1, **characterized in that** said base (4) comprises a first annular base (5), provided with holes for first screws (3), and an axial hollow (6) that accommodates and supports said element (7) shaped like an overturned T which has a head (8) which can be slideably associated within said hollow (6) in contrast to a first sealing gasket (9) arranged at a first seat (10) formed at the perimetric rim of said head (8), said element (7) being provided with a shank (11), which is connected to said head (8) on an inclined plane (12), provided radially and axially to said shank (11) being a first pipe (13) and a second pipe (14), which are mutually connected, for the passage of air, in proximity to the end tips of said shank (11) a second seat (15) being provided for a plurality of said balls (16) which can be partially accommodated within said seat (15), said element (7) being movable axially to said abutment (17) and being essentially shaped like an overturned T so as to form a second annular base (18) in which adapted holes are provided for complementarily shaped second screws (19) which are adapted to render said abutment (17) integral with said base

4. The structure according to one of the preceding claims, **characterized in that** provided at said shank (20) of said abutment (17) are openings (21) which are adapted to allow the partial exit of said balls (16) which thus cannot exit entirely, the axial movement of said element (7) with respect to said abutment (17) occurring in contrast to elastically compressible elements such as springs (22), said movement being achieved by way of the injection of air through an adapted third pipe (23) which is provided radially to said first annular base (5), said third pipe (23) injecting air below the head (8) of said element (7), the thrust to which said element (7) is subjected leading to the compression of said springs (22) which, once the pressure of the air has ceased, push said element (7) back into said hollow (6).

5. The structure according to one of the preceding claims, **characterized in that** said annular ridge (27) is arranged, in the condition for stable coupling with said abutment (17), in a region facing said balls (16) that protrude from said shank (20) of the abutment (17) but slightly lowered with respect to them, the depth of said first seat or cavity (26) being such as to allow the coupling, in the stable condition, with said shank (11) of said element (7), said annular ridge (27) having a lower surface (29) which is shaped complementarily to the surface (30) of a projecting ridge (31) that protrudes from said second annular base (18) of said abutment (17) coaxially to said shank (20).

6. The structure according to one of the preceding claims, **characterized in that** said annular ridge (27) is provided with means for temporary fastening to said balls (16), which are adapted to determine the stable connection with said abutment (17), said means for temporary fastening being constituted by the upper surface (32) of said annular ridge (27), said upper surface having an inclined arrangement that interacts, in the condition of stable connection with said abutment (17), with a portion, underlying the diametrical plane, of the outer side surface of said balls (16).

7. The structure according to one of the preceding claims, **characterized in that** said balls (16) are forced to protrude outside said shank (20) of said abutment (17) by said shank (11) of said element (7) pushed upward by the air injected through said third pipe (23), in this condition said lower surface (29) of said annular ridge (27) being in abutment with the projecting ridge (31) that protrudes from said second annular base (18) of said abutment (17), said balls (16) generating a thrust, when they are forced outside said shank (20), which is discharged at the upper surface (32) of said annular ridge (27) thus resulting in a clamping that renders the connection with said abutment (17) stable.

8. An interface structure according to claim 2, **characterized in that** it also comprises a U-shaped toothed pivot (34) which is provided with a centering bush (35) that has a double taper which is adapted to enable an adaptation of the position of a manufactured article with respect to the position assumed by said pivot (34), said sleeve (24) having, proximate to a second, upper end (33), means for the jaw coupling of the U-shaped toothed pivot (34).

9. An interface structure according to claim 8, **characterized in that** said jaw coupling means are constituted by two barrels (36a, 36b) which are slideably associable within adapted seats (37a, 37b) which are provided transversely to said sleeve (24) and along the same axis so as to affect a second seat or cavity (38) which is provided axially to the sleeve and is adapted to accommodate a part of said toothed pivot (34), the ends, which are mutually facing, of said two barrels (36a, 36b) being contoured so as to interact selectively with some of said teeth (39) that are present at the lower end of said toothed pivot (34), the clamping of said two barrels (36a, 36b) and the consequent locking of said toothed pivot (34) occurring by means of an adapted third screw (40).

## Patentansprüche

1. Schnittstellenstruktur (1) für automatische Verriegelungssysteme zum Einspannen von Rohlingen, die eine Basis (4) umfasst, die mit einer Platte (2) verbunden werden kann und ein T-förmiges Element (7) trägt, das sich axial zu einem mit der genannten Basis (4) eine Einheit bildenden Pfeiler (17) bewegen kann, dessen Schaft (11) Kugeln (16) aufweist, die wahlweise aus dem genannten Pfeiler (17) hervorragen, **dadurch gekennzeichnet, dass** sie außerdem eine Hülse (24) umfasst, die aus einem einzigen Körper besteht und lösbar und koaxial mit dem genannten Pfeiler (17) verbunden werden kann und axial zu einem ersten unteren Ende (25) mit einem ersten Sitz (26) ausgestattet ist, von dem aus ein ringförmiger Rand (27) vorsteht, der mit Elementen zur vorübergehenden Befestigung an den genannten Kugeln (16) ausgestattet ist, wobei die genannten Befestigungselemente darauf ausgelegt sind, die stabile Verbindung mit dem genannten Pfeiler (17) zu bilden und die genannte Hülse (24) axial zu einem zweiten, oberen Ende (33) Elemente für die Spannbackenverbindung eines U-förmigen gezahnten Zapfens (34) mit einer Zentrierbuchse (35) aufweist.

2. Struktur nach Anspruch 1, **dadurch gekennzeichnet, dass** der genannte ringförmige Rand (27) eine Größe aufweist, die seine axiale Bewegung im Verhältnis zu der Seitenfläche (28) des genannten Schafts (11) des genannten Elements (7) gestattet.

3. Struktur nach Anspruch 1, **dadurch gekennzeichnet, dass** die genannte Basis (4) eine erste, mit Öffnungen für erste Schrauben (3) ausgestattete ringförmige Basis (5) und einen axialen Hohlraum umfasst, der das genannte wie ein umgekehrtes T geformtes Element (7) aufnimmt und trägt, das einen Kopf (8) aufweist, der gleitend in dem genannten Hohlraum (6) im Kontrast zu einer ersten, an einem ersten Sitz (10) auf dem umlaufenden Rand des genannten Kopfs (8) angeordneten Dichtung (9) verbunden werden kann, wobei das genannte Element (7) mit einem Schaft (11) versehen ist, der mit dem genannten Kopf in einer schiefen Ebene (12) verbunden ist, wobei sich radial und axial zu dem genannten Schaft (11) eine erste (13) und eine zweite Rohrleitung (14) befinden, die miteinander als Luftdurchlass auf den Enden des genannten Schafts (11) verbunden sind und ein zweiter Sitz (15) für eine Vielzahl der genannten Kugeln (16) vorhanden ist, die partielle in dem genannten Sitz (15) untergebracht werden können, wobei das genannte Element (7) axial zu dem genannten Pfeiler (17) bewegt werden kann und im Wesentlichen wie ein umgekehrtes T geformt ist, um eine zweite ringförmige Basis (18) zu bilden, in der angepasste Öffnungen für entsprechend geformte zweite Schrauben (19) vorgesehen sind, die darauf ausgelegt sind, den genannten, mit der genannten Basis eine Einheit bildenden Pfeiler (17) aufzunehmen.

4. Struktur nach einem oder mehreren der vorangegangenen Ansprüche, **dadurch gekennzeichnet, dass** sich an dem genannten Schaft (20) des genannten Pfeilers (17) Öffnungen (21) befinden, die so ausgelegt sind, dass sie den partiellen Austritt der genannten Kugeln (16) gestatten, die so nicht vollständig austreten können, da die axiale Bewegung des genannten Elements (7) im Verhältnis zu dem genannten Pfeiler (17) im Kontrast zu elastisch komprimierbaren Elementen wie Federn (22) erfolgt, wobei die genannte Bewegung durch Einleitung von Luft über eine angepasste dritte Rohrleitung (23) erfolgt, die radial zu der genannten ersten ringförmigen Basis (5) angeordnet ist, wobei die genannte dritte Rohrleitung (23) Luft unter dem Kopf (8) des genannten Elements (7) einleitet und der Druck, dem das genannte Element (7) ausgesetzt ist, zur Komprimierung der genannten Federn (22) führt, die nach dem Nachlassen des Luftdrucks das genannte Element (7) zurück in den genannten Hohlraum (6) schieben.

5. Struktur nach einem oder mehreren der vorangegangenen Ansprüche, **dadurch gekennzeichnet, dass** der genannte ringförmige Rand (27) zur stabilen Verbindung mit dem genannten Pfeiler (17) in einem Bereich gegenüber den genannten Kugeln (16), die aus dem genannten Schaft (20) des Pfeilers (17) vorstehen, jedoch im Verhältnis zu diesen leicht nach unten versetzt angeordnet ist, wobei die Tiefe des genannten ersten Sitzes oder Hohlraums (26) so ausgelegt ist, dass die stabile Kupplung mit dem genannten Schaft (11) des genannten Elements (7) ermöglicht wird und der genannten ringförmige Rand (27) eine untere Fläche (29) aufweist, die komplementär zu der Fläche (30) eines vorspringenden Rands (31) geformt ist, der von der genannten zweiten ringförmigen Basis (18) des genannten Pfeilers (17) koaxial zu dem genannten Schaft (20) vorsteht.

6. Struktur nach einem oder mehreren der vorangegangenen Ansprüche, **dadurch gekennzeichnet, dass** der genannte ringförmige Rand (27) mit Elementen zur vorübergehenden Befestigung an den genannten Kugeln (16) ausgestattet ist, die so ausgelegt sind, dass eine stabile Verbindung mit dem genannten Pfeiler (17) ermöglicht wird, wobei die Elemente zur vorübergehenden Befestigung aus der oberen Fläche (32) des genannten ringförmigen Rands (27) bestehen, wobei die genannte obere Fläche eine geneigte Anordnung aufweist, die bei stabiler Verbindung mit dem genannten Pfeiler (17) mit einem Abschnitt interagiert, der unter der entgegengesetzten Ebene der äußeren Oberfläche der genannten Kugeln (16) liegt.

7. Struktur nach einem oder mehreren der vorangegangenen Ansprüche, **dadurch gekennzeichnet, dass** die genannten Kugeln (16) zum Heraustreten aus dem genannten Schaft (20) des genannten Pfeilers (17) durch den Schaft (11) des genannten Elements (7) gebracht werden, der durch die über die genannten dritte Rohrleitung (23) eingeleitete Luft nach oben gedrückt wird, wobei unter diesen Umständen die genannte untere Fläche (29) des genannten ringförmigen Rands (27) auf dem vorstehenden Rand (31) anstößt, der von der genannten ringförmigen Basis (18) des genannten Pfeilers (17) vorsteht, wobei die genannten Kugeln (16) beim Austreiben aus dem genannten Schaft (20) einen Druck erzeugen, der an der oberen Fläche (32) des genannten ringförmigen Rands (27) entladen wird und so eine Klemmkraft erzeugt, die die Verbindung mit dem genannten Pfeiler (17) stabil macht.

8. Schnittstellenstruktur nach Anspruch 2, **dadurch gekennzeichnet, dass** sie außerdem einen U-förmigen gezahnten Zapfen (34) mit einer Zentrierbuchse (35) und einer doppelten Verjüngung umfasst, die geeignet ist, eine Anpassung der Position eines hergestellten Erzeugnisses im Vergleich zu dem genannten Zapfen (34) zu ermöglichen, wobei die genannte Hülse (24) in der Nähe eines zweiten oberen Endes (33) Elemente für die Spannbackenverbindung des U-förmigen gezahnten Zapfens (34) umfasst.

9. Schnittstellenstruktur nach Anspruch 8, **dadurch gekennzeichnet, dass** die genannten Spannbackenverbindungen aus zwei Einsätzen (36a, 36b) bestehen, die gleitend in entsprechenden Sitzen (37a, 37b) verbunden werden können, die quer zu der genannten Hülse (24) und entlang der gleichen Achse angeordnet sind und so auf einen zweiten Sitz oder Hohlraum (38) der Hülse wirken, der axial zu der Hülse liegt und darauf ausgelegt ist, einen Teil des genannten gezahnten Zapfens (34) aufzunehmen, dessen den beiden Einsätzen (36a, 36b) gegenüberliegende Enden so geformt sind, dass sie wahlweise mit einigen der genannten Zähne (39) interagieren, die sich am unteren Ende des genannten gezahnten Zapfens (34) befinden, wobei die Einspannung und die daraus folgende Verriegelung des genannten gezahnten Zapfens (34) anhand einer angepassten dritten Schraube (40) erfolgt.

## Revendications

1. Structure d'interface (1) pour systèmes automatiques de verrouillage pour le montage de blancs, comprenant une base (4) qui peut être associée à une plaque (2) et qui supporte un élément en T (7) pouvant se déplacer dans le sens axial par rapport à un pilier (17) faisant partie intégrante de ladite base (4) et dont la tige (11) est dotée de billes (16) faisant sélectivement saillie hors dudit pilier (17), **caractérisée par le fait qu'**elle comprend également un manchon (24) doté d'un seul corps et pouvant être associé de façon amovible et coaxiale avec le pilier (17) et doté, axialement par rapport à une première extrémité inférieure (25), d'un premier siège (26) duquel une arrête annulaire (27) fait saillie, avec moyens d'ancrage temporaire auxdites billes (16), lesdits moyens d'ancrage permettant d'assurer le raccordement stable au pilier (17) susmentionné, et le manchon sus indiqué (24) ayant, dans le sens axial à une deuxième extrémité supérieure (33), un raccordement à mâchoire à un pivot denté en forme de U (34) doté d'une bague de centrage (35).

2. Structure selon la revendication 1, **caractérisée en ce que** ladite arrête annulaire (27) est de taille telle à permettre son mouvement axial par rapport à la surface latérale (28) de la tige (11) de l'élément (7) susmentionné.

3. Structure selon la revendication 1, **caractérisée en ce que** la base (4) comprend une première base annulaire (5) munie de trous pour les premières vis (3) et d'un creux axial (6) qui accueille et supporte l'élément (7) susmentionné ayant la forme d'un T renversé avec une tête (8) qui peut être associée par glissement dans ledit creux (6) par opposition à un premier joint d'étanchéité (9) disposé sur un premier siège (10) formé sur le pourtour périmétrique de la tête (8) mentionnée plus haut, l'élément (7) étant doté d'une tige (11) qui est reliée à la tête (8) sur un plan incliné (12) avec, radialement et axialement à la tige (11), un premier tube (13) et un deuxième tube (14) mutuellement connectés entre eux pour le passage de l'air, à proximité de l'extrémité de la tige (11), et un deuxième siège (15) étant prévu pour plusieurs des billes (16) susmentionnées pouvant se loger partiellement dans ledit siège (15), l'élément (7) pouvant être mû axialement par rapport au pilier (17) et étant essentiellement de la forme d'un T renversé de sorte à former une deuxième base annulaire (18) dans laquelle des trous adaptés sont prévus pour les deuxièmes vis de forme complémentaire (19) faire dudit pilier (17) un élément intégral de la base.

4. La structure selon une ou plusieurs des revendications précédentes, **caractérisée en ce que** la tige (20) du pilier (17) présente des ouvertures (21) permettant la sortie partielle des billes (16) qui ne peuvent toutefois pas sortir entièrement, le mouvement axial de l'élément (7) par rapport audit pilier (17) se faisant par opposition aux éléments élastiquement compressibles tels que des ressorts (22), ce mouvement étant obtenu par injection d'air à travers un troisième tube adapté (23) prévu radialement par rapport à la première base annulaire (5), ce troisième tube (23) injectant de l'air en-dessous de la tête (8) de l'élément (7) en imprimant une poussée à l'élément (7) de sorte à comprimer lesdits ressorts (22) qui, lorsque la pression de l'air a cessé, repoussent ce même élément (7) dans le creux (6).

5. La structure selon une ou plusieurs des revendications précédentes, **caractérisée en ce que** l'arrête annulaire (27) est disposée, en état de couplage stable avec le pilier (17), dans une région faisant face aux billes (16) qui font saillie hors de la tige (20) du pilier (17), mais en position légèrement plus basse par rapport à elles, la profondeur du premier siège ou creux (26) étant tel à permettre le couplage, en état stable, à la tige (11) de l'élément (7), ladite arrête annulaire (27) ayant une surface inférieure (29) de forme complémentaire à la surface (30) d'une arrête saillante (31) qui fait saillie hors de la deuxième base annulaire (18) du pilier (17), dans le sens coaxial par rapport à la tige (20).

6. Structure selon une ou plusieurs des revendications précédentes, **caractérisée en ce que** l'arrête annulaire (27) est dotée de moyens d'ancrage temporaires aux billes (16) adaptées à assurer le raccordement stable au pilier (17), ces moyens d'ancrage temporaire étant constitués par la surface supérieure (32) de ladite arête annulaire (27), surface supérieure qui présente un arrangement incliné interagissant, en état de raccordement stable avec le pilier (17), avec une partie sous-jacente au plan diamétral de la surface du côté extérieur des billes (16).

7. Structure selon une ou plusieurs des revendications précédentes, **caractérisée en ce que** les billes (16) sont forcées de faire saillie hors de la tige (20) du pilier (17) par la tige (11) de l'élément (7) en raison de la poussée vers le haut imprimée par l'air injecté via le troisième tube (23), dans cet état la surface inférieure (29) susmentionnée de l'arrête annulaire (27) venant buter contre l'arête saillante (31) qui fait saillie hors de la deuxième base annulaire (18) du pilier (17), lesdites billes (16) créant une poussée lorsqu'elles sont forcées de sortir de la tige (20), cette poussée étant déchargée à la surface supérieure (32) de l'arrête annulaire (27), entraînant ainsi un blocage qui stabilise le raccord au pilier (17).

8. Structure d'interface selon la revendication 2, **caractérisée en ce qu'**elle comprend également un pivot denté en forme de U (34) muni d'une bague de centrage (35) avec un double cône tel à permettre l'adaptation de la position d'un article manufacturé par rapport à la position prise par ledit pivot (34), le manchon (24) ayant, proche d'une deuxième extrémité supérieure (33), des moyens de couplage à mâchoire au pivot denté en forme de U (34).

9. Structure d'interface selon la revendication 8, **caractérisée en ce que** le raccord à mâchoire susmentionné est constitué de deux barillets (36a, 36b) pouvant être associés par glissement dans les logements adaptés (37a, 37b) disposés transversalement au manchon (24) et le long du même axe de sorte à affecter un deuxième siège ou creux (38) disposé en position axiale par rapport au manchon et adapté à recevoir une partie du pivot denté (34), les extrémités, qui se font mutuellement face, des deux barillets (36a, 36b) étant profilées de façon à interagir sélectivement avec certaines de ces dents (39) se trouvant à l'extrémité inférieure dudit pivot denté (34), le serrage des deux barillets (36 a, 36 b) et le verrouillage résultant dudit pivot denté (34) se faisant au moyen d'une troisième vis adaptée (40).
